Europäisches Patentamt

European Patent Office

Office européen des brevets

(11) Numéro de publication: **0 357 481**
**A1**

## (12) DEMANDE DE BREVET EUROPEEN

(21) Numéro de dépôt: **89402180.7**

(22) Date de dépôt: **01.08.89**

(51) Int. Cl.5: **B 65 B 61/18**
**B 65 D 75/60**

(30) Priorité: **19.08.88 FR 8811023**

(43) Date de publication de la demande:
**07.03.90 Bulletin 90/10**

(84) Etats contractants désignés:
**AT BE CH DE ES GB GR IT LI NL**

(71) Demandeur: **COMPAGNIE GERVAIS-DANONE**
**126-130 rue Jules Guesde**
**F-92302 Levallois Perret (FR)**

(72) Inventeur: **Maisonnial, Joel**
**45, rue du Professeur Patel**
**F-69009 Lyon (FR)**

(74) Mandataire: **Orès, Bernard et al**
**Cabinet ORES 6, Avenue de Messine**
**F-75008 Paris (FR)**

(54) Procédé et machine de fabrication de sachets ou paquets d'emballage en film mince.

(57) Procédé de fabrication de sachets ou paquets d'emballage en film mince dans lequel on exécute, après remplissage du paquet ou sachet, au voisinage des bords libres de ce dernier, une ligne de perforations (20).

Machine pour la fabrication de tels sachets caractérisée en ce qu'elle comporte un poste de fermeture (S) des paquets ou sachets muni d'organes propres perforer la partie de tête ou col du sachet ou paquet à distance des bords libres de l'enveloppe dudit paquet ou sachet.

Application : notamment à l'emballage de produits alimentaires.

FIG.1

Bundesdruckerei Berlin

EP 0 357 481 A1

**Description**

## PROCEDE ET MACHINE DE FABRICATION DE SACHETS OU PAQUETS D'EMBALLAGE EN FILM MINCE

L'invention a pour objet un procédé et une machine de fabrication de sachets ou paquets d'emballage en film mince.

Certains produits, par exemple mais non exclusivement des produits alimentaires, sont actuellement conditionnés dans des sachets ou paquets en feuille mince, comme du film de polypropylène de quelques dizaines de microns d'épaisseur. Après confection des paquets ou sachets à partir d'un tube ou d'une bobine de film et remplissage en produit à emballer, lesdits paquets ou sachets sont généralement fermés à leur extrémité de col ou tête distante du fond par un processus de rigidification du film à l'aide de fers chauffants qui assurent un thermoscellage des bords libres de l'emballage, cette phase de fermeture étant suivie d'une coupe de l'excédent du col ou tête de sachet puis d'un pliage sur deux ou trois plis et enfin apposition d'un ruban adhésif ou analogue de maintien des bords repliés.L'ouverture de ces paquets ou sachets est parfois mal-commode, d'une part et, lorsqu'elle est réalisée suivant la direction longitudinale du paquet ou sachet elle entraîne parfois, d'autre part, la déchirure complète de celui-ci en raison du caractère "filant" du matériau et également en raison de la fragilisation apportée au film lors du traitement thermique de rigidification qui précède le pliage.

Le problème se pose donc, d'une manière générale, de fournir un procédé et une machine de fabrication de paquets ou sachets d'emballage en film mince qui permettent de pallier les inconvénients importants rappelés ci-dessus.

La solution de ce problème, qui consiste à proposer des moyens simples d'ouverture d'un sachet ou paquet en film mince doit, pour être acceptable, satisfaire à de nombreuses conditions. Ainsi, le procédé et la machine doivent être opératoires pour tous les types de fermeture des têtes de sachets, qu'ils soient à double pli avant, double pli arrière, ou à fermeture du type "boulangère". De même, le procédé et le dispositif doivent permettre de conserver l'aspect général habituel du paquet, notamment lorsque ce dernier est du type parallèlèpipédique, -sans attacher à ce terme une signification géométrique précise-, de même que permettre un fonctionnement des machines d'ensachage qui tienne compte des variations de volume de certains produits à emballer, variations qui sont dûes elles-mêmes à des différences de densité ou de forme de certains produits d'un même genre, par exemple des pâtes alimentaires. A ces conditions s'ajoutent également la nécessité de procurer un moyen de fermeture qui conserve et assure l'inviolabilité du paquet ou sachet aussi longtemps que celui-ci n'a pas été mis en service, qui soit d'un faible coût pour ne pas grever le prix du produit fini, tant en ce qui concerne les frais d'investissement que ceux des paquets ou sachets individuels et, enfin, permette de conserver les cadences de production d'ensachage connues, qui sont élevées, de l'ordre parfois d'une centaine de sachets ou paquets par minute.

Le problème est résolu, selon l'invention, par un procédé de fabrication d'emballages en film mince dans lequel les bords libres d'une enveloppe constitutive de l'emballage sont rapprochés pour leur fermeture, laquelle a lieu après remplissage dudit emballage, avec une étape d'exécution de perforation au voisinage de ladite fermeture caractérisée en ce que pour un emballage comme un paquet ou un sachet de forme sensiblement parallélipédique les perforations sont exécutées au voisinage desdits bords libres, suivant une ligne qui, en introduisant des zones de moindre résistance dans le film mince, rend extrêmement simple l'ouverture totale du sachet ou paquet par déchirure le long de ces perforations.

Le fait de réaliser la ligne de perforations après remplissage d'un sachet ou paquet permet de tenir compte des variations de volumes de certains produits à emballer, et cela contrairement aux procédés d'emballage connus faisant application d'une gaine en film mince pré-perforée. En outre, un tel procédé permet la confection de paquets de forme les plus diverses, ayant des fonds et des têtes de forme identique ou différente, par exemple simples en ce qui concerne le fond à contour parfois rectangulaire et à double pli sur la partie de tête ou de col.

Selon une autre caractéristique de l'invention, lesdites perforations sont des micro-perforations du type à points, ou à traits, ou à points et traits interrompus dont les formes, dimensions et intervalles sont choisis en correspondance de la nature du matériau constitutif du film mince.

Selon une autre caractéristique de l'invention, les perforations sont effectuées à chaud, à une température voisine de la température de fusion du matériau constitutif du film mince.

Dans une variation de réalisation, les perforations sont effectuées à froid.

Dans une forme de réalisation préférée, les perforations sont effectuées simultanément à l'opération de thermoscellage par soudure des bords libres de l'emballage, un tel mode opératoire étant particulièrement avantageux par la possibilité qu'il offre de régler de manière précise la distance séparant un des bords de la bande de soudure de la ligne de perforations, d'une part et, également la possibilité de mettre en oeuvre le procédé à un seul et même poste de travail, d'autre part, soit en aménageant ce poste pour effectuer l'ensemble des deux opérations, soit en modifiant les postes de fermeture des machines d'ensachage existantes pour l'exécution des perforations.

Un tel procédé est alors très différent de ce qu'enseigne l'art antérieur, par exemple FR-A-2 201 219 qui est relatif à un sur-emballage à l'aide d'une feuille de matériau thermorétractable ou encore de ce que montre GB-A-599 184 qui est relatif à un type d'emballage du genre "berlingot" dans lequel des ouvertures sont prévues pour livrer passage au contenu dudit berlingot.

Une machine de fabrication de sachets ou paquets d'emballage en film mince comportant des moyens de confection d'une enveloppe constitutive desdits paquets ou sachets à partir d'un film est caractérisée en ce qu'elle comporte également, à l'aval d'un poste de remplissage dans le sens de circulation des paquets ou sachets dans la machine, un poste de fermeture desdits paquets ou sachets muni d'organes propres à perforer la partie de tête ou col à distance des bords libres de l'enveloppe dudit paquet ou sachet.

Dans une forme de réalisation préférée, les organes de perforation sont des outils à bords opératoires conformés suivant des dents dont le profil est choisi en fonction de la nature du matériau constitutif du film formant le paquet ou sachet.

Selon une autre caractéristique de l'invention, les organes de perforation sont adjacents à au moins une mâchoire de scellage du paquet ou sachet et le mouvement desdits organes est commandé par des moyens de came ou analogues associés au support de ladite mâchoire.

Dans une forme de réalisation avantageuse, l'organe de perforation est porté par un bras pivotant adjacent à une machoire de scellage dans un forage de laquelle l'organe de perforation est monté à coulissement.

Dans cette forme de réalisation avantageuse, l'invention prévoit en outre d'associer aux mâchoires de scellage des organes de maintien du film pendant l'exécution des perforations, lesdits organes de maintien étant disposés à l'opposé des parties opératoires des mâchoires par rapport à l'organe de perforation.

L'invention, qui a également pour objet les sachets ou paquets d'emballage en film mince, notamment les sachets ou paquets du type parallèlépipédique, tels qu'obtenus par mise en oeuvre du procédé défini ci-dessus ou à l'aide de la machine dont les caractéristiques viennent d'être explicitées, sera bien comprise par la description qui suit, faite à titre d'exemple et en référence aux dessins annexés dans lesquels :

Les figures 1 à 4 illustrent, schématiquement, un procédé selon l'invention de fabrication de sachets ou paquets d'emballage en film mince, notamment du type parallèlépipédique ;

La figure 5 illustre schématiquement une partie de machine selon l'invention ;

La figure 6 est une vue analogue à celle de la figure 5 mais pour une autre forme de réalisation ;

La figure 7 est une vue schématique d'une partie de machine selon l'invention ;

La figure 8 est une vue analogue à celle de la figure 7 mais pour une variante ;

Les figures 9 à 11 illustrent schématiquement divers types d'emballages propres à être réalisés à l'aide d'une machine et/ou d'un procédé selon l'invention ;

Les figures 12 et 13 illustrent, schématiquement, deux conditions d'un paquet ou sachet obtenu à l'aide d'une machine et/ou d'un procédé selon l'invention.

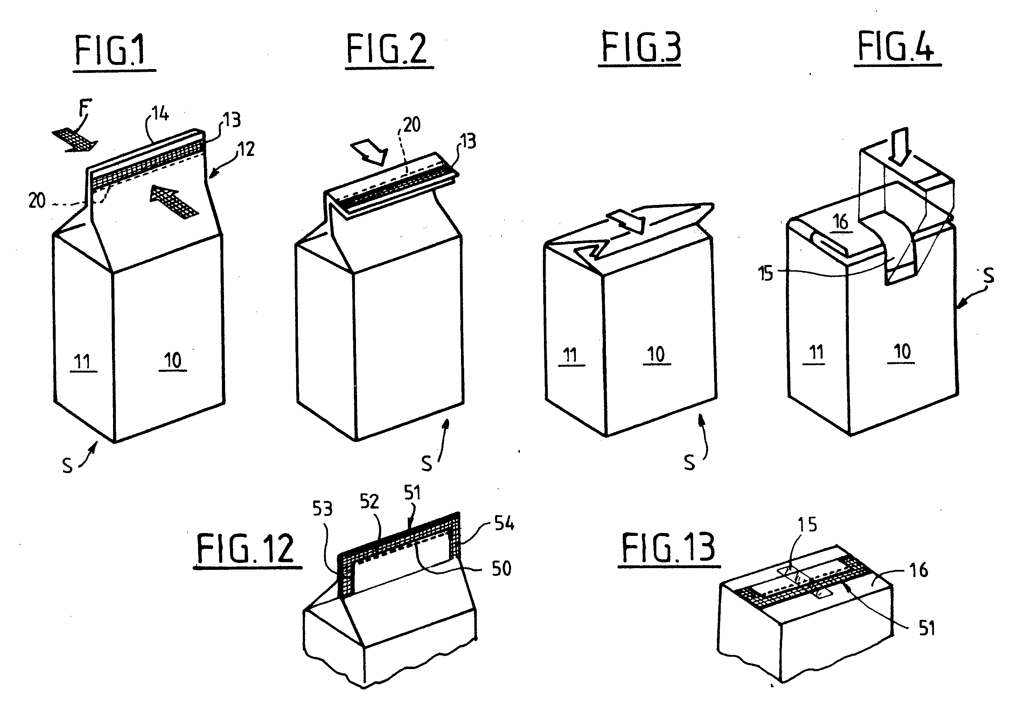

On se réfère d'abord aux figures 1 à 4 qui illustrent schématiquement le processus de fabrication de paquets ou sachets d'emballage en film mince, S, par exemple, et sans que cette indication ait quelque caractère limitatif que ce soit, un film de polypropylène dont l'épaisseur peut être de l'ordre de 40 microns. Le paquet ou sachet S, qui peut être confectionné sur une machine du type vertical ou sur une machine du type à révolver à mandrins est avantageusement du type parallèlépipédique dans la réalisation décrite et représentée, sans qu'un caractère géométrique précis ne soit attaché à ce terme , celui-ci devant être entendu comme définissant un paquet dont le fond est à contour quadrangulaire à partir duquel se dressent quatre faces latérales, comme celles visibles en 10 et 11, faces latérales dont les parties d'extrémité opposées au fond forment le col ou tête 12 du sachet après qu'elles aient été rapprochées les unes des autres par leurs bords libres, comme montré sur la figure 1. Pour le conditionnement des produits que sont destinés à renfermer les paquets ou sachets S, par exemple des produits comme des pâtes alimentaires, du café, etc.., l'ensacheuse du type vertical ou à révolver à mandrins est suivie d'une machine de remplissage laquelle comporte, -au voisinage de son extrémité aval dans le sens de défilement des paquets ou sachets sur la machine-, un poste de fermeture desdits paquets ou sachets. Celui-ci comprend généralement des mâchoires de scellage, illustrées schématiquement par la double flèche F de la figure 1, mâchoires qui lorsqu'elles sont rapprochées l'une de l'autre, forment sur la tête de paquet ou sachet une bande 13 de soudure nettement plus rigide que le reste du sachet. Après coupe éventuelle de l'excédent de film au-delà des bords libres 14 de la tête de sachet, ladite tête est pliée, comme montré sur la figure 2, en tirant parti de la bande de plus grande rigidité 12, suivant une forme du type double pli avant, (comme montré sur la figure 3) ou double pli arrière ou même fermeture du type "boulangère", l'opération de pliage étant suivie de la mise en place sur les bords pliés d'une languette 15 de ruban adhésif appliquée, par exemple, sur la face latérale 10 et la face de dessus 16 du paquet.

Le mode de fabrication qui vient d'être decrit conduit à des sachets qui, notamment dans le cas d'un film mince constitué par du polypropylène ont après remplissage une forme oblongue, mais dans laquelle les bords ou arêtes du parallèlépipède (au sens géométrique) sont quelque peu effacés ; ils sont parfois difficiles à ouvrir par un consommateur après que celui-ci ait retiré la languette 15 et, même lorsque cette ouverture est satisfaisante, la nature même du matériau constitutif du film entraîne un risque de déchirure complète du paquet ou sachet S compte-tenu du caractère "filant" du polypropylène. Pour pallier ces inconvénients, l'invention propose un procédé suivant lequel, lors de la phase finale de fermeture de la tête du paquet ou sachet, après remplissage de ce dernier, on procède au-dessous de la bande de soudure 13 à l'exécution d'une ligne de perforations 20, figures 1 et 2, qui règne avantageusement sur toute la longueur de la bande 13. Cette ligne de perforations, ou plus exactement de micro-perforations, est effectuée à chaud ou à froid, suivant la nature du matériau constitutif du film utilisé et suivant un dessin qui est lui aussi fonction dudit materiau.

Ainsi, lesdites micro-perforations peuvent être sous forme de points, plus ou moins rapprochés, ou sous forme de traits, également plus ou moins rapprochés ou sous forme de traits et/ou points, etc...

Quel que soit le mode de réalisation, la présence d'une ligne de micro-perforations sur la tête des sachets, permet, après qu'ait été retirée la languette de matériau adhésif 15, de déplier ladite tête de sachet, à partir de la condition montrée sur la figure 4, pour l'amener à celle montrée sur la figure 1 en laquelle l'utilisateur peut saisir la partie relativement rigide formée par la bande 13 et déchirer la partie haute de la tête de sachet le long de la ligne de plus faible résistance des micro-perforations 20, sans faire appel à des ciseaux, couteau, ou autre objet comme fréquemment usuel jusqu'à présent.

Pour la mise en oeuvre du procédé, l'invention prévoit de faire appel à une machine de fabrication d'emballages spécialement conçue pour l'exécution de perforations ou, en variante, de faire application d'une ensacheuse dont le poste de fermeture est alors aménagé pour ce faire.

Dans l'un et l'autre cas, l'invention prévoit avantageusement de réaliser lesdites perforations par un ou des organes de perforation, par exemple du type à dents.

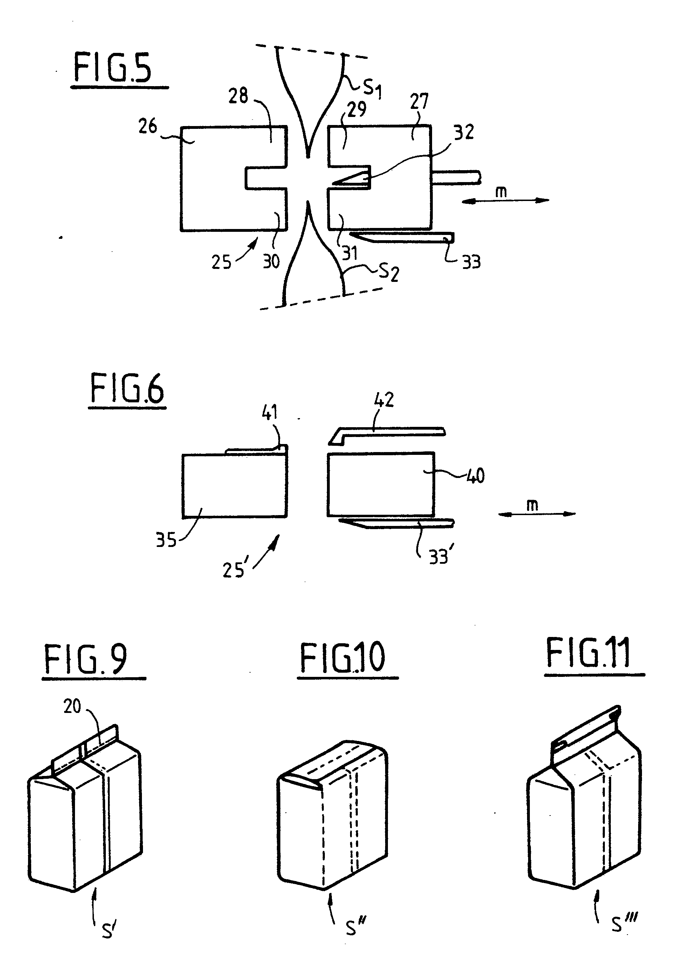

Dans une première forme de réalisation, illustrée sur la figure 5, la machine de fabrication d'emballages est du type "vertical" c'est-à-dire du type dans lequel un film mince est d'abord mis en forme suivant un tube dans lequel est introduit le produit à emballer, lequel est mis à niveau le cas échéant par compactage, cette opération étant suivie de la mise en forme de la tête de sachet, qui est alors amenée au droit d'un poste 25 de fermeture comportant des mâchoires de scellage 26 et 27 à section générale en U, les mâchoires 26 et 27 étant mobiles au rapprochement et à l'écartement suivant la direction de la double flèche $\underline{m}$.

La forme en U des mâchoires 26 et 27 permet ainsi d'effectuer simultanément par les branches 28 et 29 des mâchoires 26 et 27, respectivement, la soudure du bas d'un paquet S, tandis que les branches 30 et 31 desdites mâchoires assurent la soudure de la partie haute d'un sachet Sz pour former la bande 13 de celui-ci. Comme bien visible sur la figure 5, à la mâchoire 27 est associé un couteau de coupe 32 pour la séparation des sacs $S_1$ et $S_2$ ainsi que pour le sectionnement de l'excédent de matière au-delà des bords libres du sachet S d'une part et, d'autre part, un organe de perforation 33, avantageusement à dents, pour la formation des perforations 20 au-dessous de la bande 13.

L'organe de perforation 33 peut être prévu pour être opératoire à froid ou, en variante, à chaud, en fonction de la nature du matériau constitutif du film formant le sachet S.

Lorsque l'ensacheuse est du type à révolver à mandrings, cas où les sachets se présentent à l'unité au poste de soudure, le poste 25', est comme montré sur la figure 6. Il comprend alors des mâchoires de scellage 35 et 40 mobiles au rapprochement et à l'éloigement, comme montré par la double flèche $\underline{m}$, les moyens de sectionnement du col ou tête de sachet après soudure étant ici constitués par des couteaux 41 et 42 associés aux mâchoires 35 et 40, respectivement, l'organe d'exécution des perforations 33, associé à la mâchoire 40 étant semblable à l'organe de perforation 33 de la réalisation précédemment décrite.

Le réglage de la position relative de l'organe de perforation 33 par rapport à la branche 40 permet de garder constante, de façon simple et sûre, la distance séparant la ligne de perforations 20 de la bande 13 et cela indépendamment des variations possibles de densité et/ou de volume d'un même produit à emballer dans les sachets ou paquets S, résultat qu'il est impossible d'obtenir dans les procédés de conditionnement faisant application d'une gaine pré-perforée.

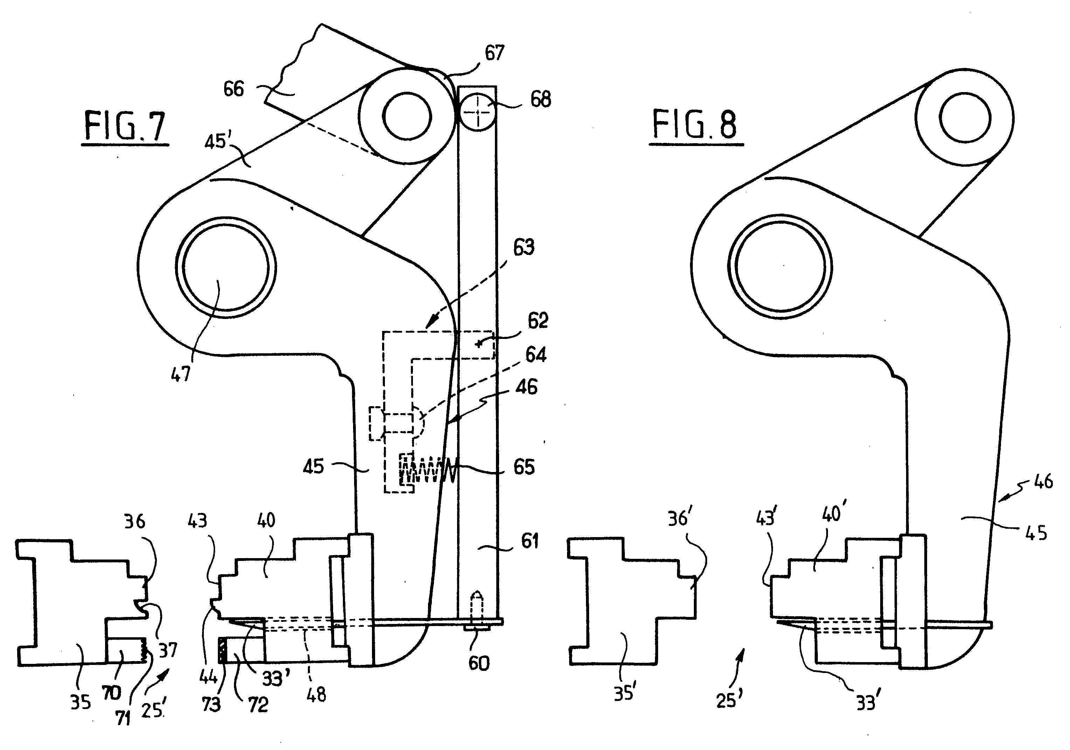

Dans une telle réalisation, illustrée plus en détail sur la figure 7, la mâchoire 35 comporte une face opératoire 36 dans laquelle est prévue une creusure 37, sensiblement en quart de rond, tandis que la mâchoire 40 présente une face opératoire 43 de forme conjuguée avec une nervure 44 également sensiblement en quart de rond. La mâchoire 40, montée sur le bras 45 d'un levier coudé 46 pivotant autour d'un axe 47, est percée d'un forage 48 dans lequel est monté à coulissement l'organe de perforation 33' fixé par une vis 60 à l'extrémité d'un bras 61 adjacent au bras 45 et propre à pivoter autour d'un axe 62 qui le traverse sensiblement à moitié de sa longueur. L'axe 62 est porté par une cornière 63 de position réglable à l'aide d'une vis 64 et le pivotement du bras 61 dans le sens des aiguilles d'une montre a lieu contre l'action d'un ressort 65 interposé entre le bras 61 et la cornière 63. Pour commander ce mouvement de pivotement et ainsi rendre opératoire l'organe de perforation 33', après exécution de la bande 13 par les faces 36-43, on prévoit d'associer au levier 46 un bras 66 dont l'extrémité attelée sur le bras 45' du levier coudé 46 présente un bossage 67 faisant office de came lorsqu'il coopère avec un galet 68 que porte l'extrémité du bras 61 opposée à celle de fixation de l'organe de perforation 33'. Ce dernier est ainsi déplacé suivant un mouvement de translation à la fin du mouvement du bras 66, c'est-à-dire après que les mâchoires de scellage aient été rendues opératoires.

Pour s'opposer au déplacement de la partie de la tête du sachet se trouvant au droit de l'organe de perforation 33', on équipe la mâchoire 35 d'une enclume 70 à face opératoire 71 rainurée et la mâchoire 40 d'un bloc 72 de forme correspondante garni sur sa face opératoire d'un revêtement de caoutchouc 73, l'enclume 70 et le bloc 72 étant disposés à l'opposé des faces 36 et 43 par rapport à l'organe de perforation 33'.

Alors que la gorge 37 et la nervure 44 de la réalisation montrée sur la figure 7 permettent d'initier les pliages montrés sur la figure 2 simultanément à l'opération de scellage, la réalisation illustrée sur la figure 8 prévoit que le poste 25' de fermeture des paquets ou sachets S soit équipé de mâchoires de scellage 35', et 40', identiques aux mâchoires 35 et 40 de la réalisation précédente mais dont les faces opératoires 36', et 43', respectivement, sont dépourvues de gorge et de nervure, de sorte que les paquets ou sachets S conformés dans une telle machine peuvent être dépourvus du double pli avant ou double pli arrière, montré sur les figures 3 et 4, par exemple pour former des paquets ou sachets S', comme montré sur la figure 9 dans lesquels le col ou tête de sachet n'est pas replié avec la ligne de micro-perforations à l'intérieur des plis.

L'invention n'est pas limitée, bien entendu, à la fabrication de sachets ou paquets S ou S'. Au contraire, elle peut être mise en oeuvre pour la fabrication d'emballages comme montré en S'' sur la figure 10, ou en S''' sur la figure 11.

L'invention trouve également application pour la fabrication de sachets ou paquets à simple rabat, comme montré sur les figures 12 et 13. Dans ce cas, les perforations ou micro-perforations 50 sont exécutées au-dessous d'une zone 51 rigidifiée par thermoscellage, zone qui n'a plus alors la configuration d'une bande, mais peut présenter un contour en U à âme 52 et ailes 53 et 54. Dans un tel cas, également, après repli du rabat sur la face supérieure 16 du paquet ou sachet, celui-ci est maintenu en place par une languette auto-adhésive 15.

Par la disposition selon cette réalisation, qui évite toute perforation dans le pli, est également éliminé tout risque d'éclatement du sachet en raison des forces exercées par le produit enfermé lors des différents transferts tant dans la machine d'ensachage qu'après sortie de celle-ci.

## Revendications

1. Procédé de fabrication d'emballages en film mince dans lequel les bords libres d'une enveloppe constitutive d'un emballage sont rapprochés pour leur fermeture, laquelle a lieu après remplissage dudit emballage, avec une étape d'exécution de perforations au voisinage de ladite fermeture, caractérisé en ce que pour un emballage comme un paquet ou un sachet de forme sensiblement parallélépipédique les perforations (20, 50) sont exécutées au voisinage desdits bords libres (14), suivant une ligne qui, en introduisant des zones de moindre résistance dans le film mince, rend extrêmement simple l'ouverture totale du sachet ou paquet par déchirure le long de ces perforations.

2. Procédé selon la revendication 1, caractérisé en ce que lesdites perforations (20, 50) sont des micro-perforations du type à points, ou à traits, ou à points et traits interrompus dont les formes, dimensions et intervalles sont choisis en correspondance de la nature du matériau constitutif du film mince.

3. Procédé selon l'une quelconque des revendications précédentes, caractérisé en ce que les perforations sont effectuées à chaud.

4. Procédé selon l'une quelconque des revendications 1 ou 2, caractérisé en ce que les perforations sont effectuées à froid.

5. Procédé selon l'une quelconque des revendications précédentes, caractérisé en ce que l'exécution des perforations a lieu simultanément à l'opération de scellage des bords libres de l'emballage.

6. Procédé selon la revendication 5, caractérisé en ce que les perforations sont exécutées à distance précise, prédéterminée, d'un des bords de la bande de soudure (13) réalisé au cours de l'opération de scellage.

7. Machine de fabrication de sachets ou paquets d'emballage en film mince comportant des moyens de confection d'une enveloppe constitutive desdits paquets ou sachets, caractérisée en ce qu'elle comporte également un poste de fermeture (25, 25') desdits paquets ou sachets (S, S', S'', S'''....) muni d'organes (33, 33'...) propres à perforer la partie de tête ou col (12) du sachet ou paquet à distance des bords libres (14) de l'enveloppe dudit paquet ou sachet (S, S', S'', S''').

8. Machine selon la revendication 7, caractérisée en ce que les organes de perforation sont des outils (33, 33') à bords opératoires conformés suivant des dents dont le profil est choisi en fonction de la nature du matériau constitutif du film formant le paquet ou sachet (S, S', S'', S''').

9. Machine selon l'une quelconque des revendications è ou 8, caractérisée en ce que les organes de perforation sont adjacents à au moins une mâchoire (27, 40, 40') de scellage du paquet ou sachet (S) et en ce que le mouvement desdits organes est commandé par des moyens de came ou analogues (67) associés au support (46) de ladite mâchoire (40, 40').

10. Machine selon la revendication 9, caractérisée en ce qu'elle comporte deux mâchoires (35, 40 ; 35,' 40') de thermoscellage mobiles au rapprochement et à l'écartement et en ce que l'organe de perforation (33') est porté par un bras pivotant (61) adjacent à la mâchoire de thermoscellage (40) et coulisse dans un forage (48).

11. Machine selon la revendication 10, caractérisée en ce qu'aux mâchoires de thermoscellage (35, 40) sont associés des organes de maintien (70, 72) du film formant l'enveloppe des paquets ou sachets pendant l'exécution des perforations, lesdits organes (70, 72) étant disposés à l'opposé des parties opératoires (36, 43) des mâchoires (35, 40) par rapport à l'organe de perforation (33').

12. Paquet ou sachet en film mince, notamment du type parallélépipédique, en particulier en film de polypropylène ou matériau analogue obtenu par mise en oeuvre du procédé selon l'une quelconque des revendications 1 à 6 ou à l'aide d'une machine selon l'une quelconque des revendications 7 à 11.

FIG.4

FIG.3

FIG.2

FIG.1

FIG.12

FIG.13

## FIG.5

## FIG.6

## FIG.9

## FIG.10

## FIG.11

FIG.8

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,X | FR-A-2 201 219 (TETRA PAK)<br>* Page 3, ligne 22 - page 4, ligne 13; figures 1,2 * | 1,4-8, 12 | B 65 B 61/18<br>B 65 D 75/60 |
| A | | 9,10 | |
| | --- | | |
| D,A | GB-A- 599 184 (RADO)<br>* Page 1, lignes 72-84; page 2, lignes 35-45; figures 1,2 *<br>----- | 1,4-8 | |

**DOMAINES TECHNIQUES RECHERCHES (Int. Cl.5)**

B 65 B
B 65 D

Le présent rapport a été établi pour toutes les revendications

| Lieu de la recherche | Date d'achèvement de la recherche | Examinateur |
|---|---|---|
| LA HAYE | 13-11-1989 | CLAEYS H.C.M. |